# EUROPEAN PATENT APPLICATION

(11) **EP 4 707 076 A1**
(43) Date of publication of application: **11.03.2026**
(21) Application number: 24835325.2
(22) Date of filing: 01.07.2024
(51) Int. Cl.: B60R 16/023, B60L 58/10, B60L 15/20

(54) **POWERTRAIN DOMAIN INTEGRATED CONTROL METHOD AND APPARATUS, ELECTRONIC DEVICE, AND READABLE STORAGE MEDIUM**

(30) Priority: 06.07.2023 CN 202310829314
(71) Applicant: Zhejiang Farizon Zhixin Technology Co., Ltd., Hangzhou, Zhejiang 310052 (CN); Zhejiang Farizon New Energy Commercial Vehicle Group Co., Ltd., Hangzhou, Zhejiang 310051 (CN); Zhejiang Geely Holding Group Co., Ltd., Hangzhou, Zhejiang 310051 (CN)
(72) Inventor: XU, Xiuhua, Hangzhou, Zhejiang 310052 (CN); HUO, Yuan, Hangzhou, Zhejiang 310052 (CN); FENG, Shun, Hangzhou, Zhejiang 310052 (CN); ZHOU, Xianyong, Hangzhou, Zhejiang 310052 (CN); WANG, Yirong, Hangzhou, Zhejiang 310052 (CN); YAN, Tao, Hangzhou, Zhejiang 310052 (CN); KANG, Wenrong, Hangzhou, Zhejiang 310052 (CN); LI, Anni, Hangzhou, Zhejiang 310052 (CN); WU, Quanli, Hangzhou, Zhejiang 310052 (CN)
(74) Representative: Elzaburu S.L.P.
(86) International application number: PCT/CN2024/102994
(87) International publication number: WO 2025/007844

(57) **Abstract**

A powertrain domain integrated control method and apparatus, an electronic device, and a readable storage medium. The powertrain domain integrated control method includes: dividing component tasks of a vehicle control layer, a battery management layer, and a motor control layer of an automobile respectively to obtain a vehicle sub-task set of the vehicle control layer, a battery sub-task set of the battery management layer, and a motor sub-task set of the motor control layer; determining a vehicle interface configuration of the vehicle control layer based on the vehicle sub-task set, determining a battery management interface configuration of the battery management layer based on the battery sub-task set, and determining a motor control interface configuration of the motor control layer based on the motor sub-task set; and integrating the vehicle control layer, the battery management layer, and the motor control layer into a powertrain domain control system of a powertrain domain control unit of the automobile based on the vehicle interface configuration, the battery management interface configuration, and the motor control interface configuration.

## Description

### CROSS-REFERENCE TO RELATED APPLICATIONS

The present application claims priority to the Chinese patent application filed to the China National Intellectual Property Administration on July 6, 2023, with the application number 202310829314.1 and the title "POWERTRAIN DOMAIN INTEGRATED CONTROL METHOD AND APPARATUS, ELECTRONIC DEVICE, AND READABLE STORAGE MEDIUM", the entire content of which is incorporated by reference.

### TECHNICAL FIELD

The present application belongs to the technical field of automobile powertrain system control and relates to a powertrain domain integrated control method and apparatus, an electronic device, and a readable storage medium.

### BACKGROUND

As a green means of transportation, new energy automobiles have many advantages that internal combustion engine automobiles cannot compete in terms of environmental protection, energy conservation, and driving performance. The new energy automobile includes a vehicle control unit (VCU), a battery management system (BMS), and a motor control unit (MCU), all of which are core components of the automobile and have an important impact on the power performance, economy, reliability, safety, and other aspects of the vehicle. The functions and signals among the application layer software of the VCU, the application layer software of the BMS, and the application layer software of the MCU, which are controlled by different control units, are interacted with each other. Therefore, if any one of the VCU, the BMS, and the MCU fails or any one of the application layer software fails, the other application layer software or other control units will be unable to work, and the vehicle cannot operate. Even if the VCU, the BMS, and the MCU are integrated into the same control unit to reduce the impact on the VCU, the BMS, and the MCU when the control unit fails, the failure of any application layer software of the VCU, the BMS, or the MCU will still cause the other application layer software to fail, and the vehicle cannot operate.

The above content is only used to assist in understanding the technical solution of the present application and does not mean that the above content is admitted as prior art.

### SUMMARY

The main purpose of the present application is to provide a powertrain domain integrated control method and apparatus, an electronic device, and a readable storage medium, aiming to solve the technical problem that a vehicle fails to operate due to the failure of any one of the application layer software of the VCU, BMS, and MCU.

To achieve the above purpose, the present application provides a powertrain domain integrated control method, including:
dividing component tasks of a vehicle control layer, a battery management layer, and a motor control layer of an automobile respectively to obtain a vehicle sub-task set of the vehicle control layer, a battery sub-task set of the battery management layer, and a motor sub-task set of the motor control layer;
determining a vehicle interface configuration of the vehicle control layer based on the vehicle sub-task set, determining a battery management interface configuration of the battery management layer based on the battery sub-task set, and determining a motor control interface configuration of the motor control layer based on the motor sub-task set; and
integrating the vehicle control layer, the battery management layer, and the motor control layer into a powertrain domain control system of a powertrain domain control unit of the vehicle based on the vehicle interface configuration, the battery management interface configuration, and the motor control interface configuration.

To achieve the above purpose, the present application provides a powertrain domain integrated control apparatus, which includes:
a task division independent module, configured to respectively divide component tasks of a vehicle control layer, a battery management layer, and a motor control layer of an automobile to obtain a vehicle sub-task set of the vehicle control layer, a battery sub-task set of the battery management layer, and a motor sub-task set of the motor control layer;
an interface configuration determination module, configured to determine a vehicle interface configuration of the vehicle control layer based on the vehicle sub-task set, determine a battery management interface configuration of the battery management layer based on the battery sub-task set, and determine a motor control interface configuration of the motor control layer based on the motor sub-task set;
an integration module, configured to integrate the vehicle control layer, the battery management layer, and the motor control layer into a powertrain domain control system of a powertrain domain control unit of the automobile based on the vehicle interface configuration, the battery management interface configuration, and the motor control interface configuration.

The present application further provides an electronic device, which includes: at least one processor; and a memory communicatively connected to the at least one processor. The memory stores instructions executable by the at least one processor, and the instructions are executed by the at least one processor, so that the at least one processor is configured to execute the steps of the powertrain domain integrated control method.

The present application further provides a readable storage medium, a program for implementing a powertrain domain integrated control method is stored on the readable storage medium, and steps of the powertrain domain integrated control method are implemented when the program for implementing the powertrain domain integrated control method is executed by a processor.

The present application further provides a computer program product, including a computer program configured to implement the steps of the powertrain domain integrated control method when executed by a processor.

The present application provides a powertrain domain integrated control method, an apparatus, an electronic device, and a readable storage medium. In the present application, by respectively dividing the component tasks of the vehicle control layer, the battery management layer, and the motor control layer of the automobile to obtain the vehicle sub-task set of the vehicle control layer, the battery sub-task set of the battery management layer, and the motor sub-task set of the motor control layer, it is possible to separately divide the component tasks of the vehicle control layer, the battery management layer, and the motor control layer, reduce the dependencies among the component tasks in the vehicle control layer, the battery management layer, and the motor control layer, and minimize the mutual influence among the sub-tasks.

Based on the vehicle sub-task set, the battery sub-task set, and the motor sub-task set, the vehicle interface configuration of the vehicle control layer, the battery management interface configuration of the battery management layer, and the motor control interface configuration of the motor control layer are determined. Since the vehicle control layer, the battery management layer, and the motor control layer can respectively determine the vehicle interface configuration, the battery management interface configuration, and the motor control interface configuration, the vehicle control layer, the battery management layer, and the motor control layer will not affect each other during operation, avoiding the functions of the vehicle control layer, the battery management layer, and the motor control layer being mixed together, thereby preventing mutual involvement and influence.

Finally, according to the vehicle interface configuration, the battery management interface configuration, and the motor control interface configuration, the vehicle control layer, the battery management layer, and the motor control layer are integrated into the powertrain domain control system of the powertrain domain control unit of the automobile. Integrating the vehicle control layer, the battery management layer, and the motor control layer into the same powertrain domain control unit avoids the situation where the vehicle cannot operate when any control unit fails when the vehicle control layer, battery management layer, and motor control layer are controlled by different control units. When the vehicle control layer, the battery management layer, and the motor control layer are integrated into the powertrain domain control system of the powertrain domain control unit of the automobile, the vehicle control layer, the battery management layer, and the motor control layer can perform signal interaction in the powertrain domain control unit. Since the tasks in the vehicle control layer, the battery management layer, and the motor control layer are divided into sub-tasks, and there is boundary isolation among the vehicle control layer, the battery management layer, and the motor control layer, the failure of one task will not affect the execution of other tasks. Thus, the technical problem that the vehicle cannot operate due to the failure of any one of the vehicle control layer, the battery management layer, and the motor control layer is solved, that is, the technical problem that the vehicle cannot operate due to the failure of any one of the application layer software of the VCU, the BMS, and the MCU is solved.

### BRIEF DESCRIPTION OF THE DRAWINGS

The accompanying drawings herein are incorporated into the specification and constitute a part of the specification, showing embodiments consistent with the present application, and are used together with the specification to explain the principles of the present application.

To more clearly illustrate the embodiments of the present application or the technical solutions in the prior art, the following will briefly introduce the drawings required in the description of the embodiments or the prior art. Obviously, for those skilled in the art, other drawings can be obtained according to these drawings without creative efforts.
FIG. 1 is a schematic flowchart of a powertrain domain integrated control method according to a first embodiment of the present application.
FIG. 2 is a schematic flowchart of verification and integration in the powertrain domain integrated control method of the present application.
FIG. 3 is a schematic diagram of a software architecture of a powertrain domain control system in the powertrain domain integrated control method of the present application.
FIG. 4 is a schematic diagram of an apparatus of the powertrain domain integrated control method according to an embodiment of the present application.
FIG. 5 is a schematic diagram of a device structure of a hardware operating environment involved in the powertrain domain integrated control method according to an embodiment of the present application.

The realization of the objectives, functional features, and advantages of the present application will be further described with reference to the embodiments and the accompanying drawings.

### DETAILED DESCRIPTION OF THE EMBODIMENTS

To make the above objectives, features, and advantages of the present application more obvious and understandable, the technical solutions in the embodiments of the present application will be clearly and completely described below with reference to the accompanying drawings in the embodiments of the present application. Obviously, the described embodiments are only a part of the embodiments of the present application, rather than all the embodiments. Based on the embodiments in the present application, all other embodiments obtained by those skilled in the art without creative work shall fall within the scope of the present application.

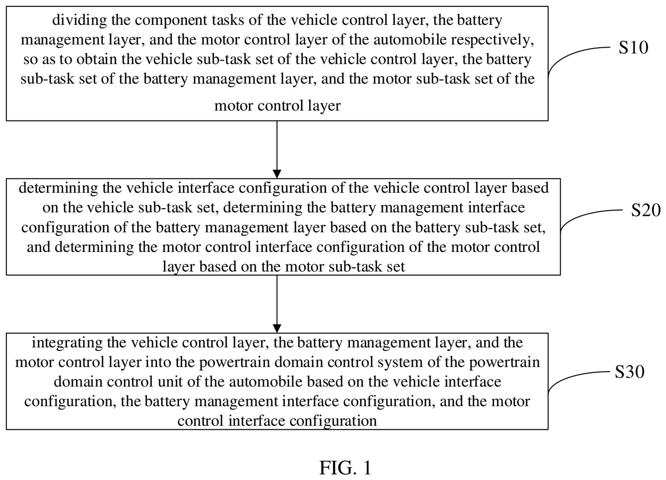

The following are the respective embodiments of the powertrain domain integrated control method:
With reference to FIG. 1, FIG. 1 is a schematic flowchart of a powertrain domain integrated control method according to a first embodiment of the present application.. The embodiment of the present application provides a powertrain domain integrated control method. In the first embodiment of the powertrain domain integrated control method of the present application, the powertrain domain integrated control method includes:
Step S10: dividing the component tasks of the vehicle control layer, the battery management layer, and the motor control layer of the automobile respectively, so as to obtain the vehicle sub-task set of the vehicle control layer, the battery sub-task set of the battery management layer, and the motor sub-task set of the motor control layer.

In this embodiment, it should be noted that this embodiment of the present application is based on the powertrain domain control (PowerONE) architecture, and integrates the application layer software of the vehicle control unit (VCU), the battery management system (BMS), and the motor control unit (MCU) into the basic environment of the powertrain domain control system of the powertrain domain control unit of the automobile. This embodiment of the application can be applied to the powertrain domain control system. The PowerONE architecture adopts the Kubernetes (a container orchestration engine) microservice architecture and assists users through the Ansible (an automation operation and maintenance tool) workflow to realize the automation of component configuration, provisioning, and life-cycle management. The vehicle control layer is configured to implement the driving torque control of the automobile, the optimal control of braking energy, the energy management of the vehicle, the diagnosis and handling of faults, and the status monitoring of the vehicle, etc. The vehicle control layer is the VCU. The battery management layer is configured to ensure that the battery pack of the vehicle is within a safe working range, provide the necessary information required for vehicle control, and respond and handle in time when an abnormality occurs. It also determines the charging and discharging power of the battery according to the ambient temperature, battery status, and vehicle requirements. The battery management layer is the BMS. The motor control layer is a control unit configured to control the motor to drive the vehicle. The motor control layer is the MCU. The component tasks are smart web components (SWC) tasks. The vehicle sub-task set is a set of SWC tasks of the VCU. The SWC is a software component defined under the automotive open system architecture (AUTOSAR) standard, which provides a software design and development method suitable for integration for the functions in the vehicle electronic system. The SWC task of the VCU can be regarded as a vehicle sub-task in the vehicle sub-task set. The battery sub-task set is a set of SWC tasks of the BMS. The SWC task of the BMS can be regarded as a battery sub-task in the battery sub-task set. The motor sub-task set is a set of SWC tasks of the MCU. The SWC task of the MCU can be regarded as a motor sub-task in the motor sub-task set.

In an embodiment, the component tasks of the vehicle control layer of the automobile are divided to obtain the vehicle sub-task set of the vehicle control layer. The vehicle sub-task set includes: a vehicle cycle sub-task set and a vehicle safety task. The vehicle cycle sub-task set includes vehicle cycle sub-tasks. Both the vehicle cycle sub-tasks and the vehicle safety task can be regarded as vehicle sub-tasks of the vehicle control layer. The component tasks of the battery management layer are divided to obtain the battery sub-task set of the battery management layer. The battery sub-task set includes a battery cycle sub-task set and a battery safety task. The battery cycle sub-task set includes battery cycle sub-tasks. Both the battery cycle sub-tasks and the battery safety task can be regarded as battery sub-tasks of the battery management layer. The component tasks of the motor control layer are divided to obtain the motor sub-task set of the motor control layer. The motor sub-task set includes a motor cycle sub-task set and a motor safety task. The motor cycle sub-task set includes: battery cycle sub-tasks. Both the motor safety task and the battery cycle sub-tasks can be regarded as motor sub-tasks of the motor management layer. When any vehicle sub-task fails, it does not affect the execution of other vehicle sub-tasks, nor does it affect the progress of the motor sub-tasks in the battery sub-task set and the motor sub-task set. In this embodiment, by respectively dividing the component tasks of the vehicle control layer, the battery management layer, and the motor control layer of the automobile to obtain the vehicle sub-task set of the vehicle control layer, the battery sub-task set of the battery management layer, and the motor sub-task set of the motor control layer. It is possible to separately divide the component tasks of the vehicle control layer, the battery management layer, and the motor control layer independently, reduce the dependencies among the component tasks in the vehicle control layer, the battery management layer, and the motor control layer, and minimize the mutual influence among the sub-tasks.

In an embodiment, before Step S10, the powertrain domain integrated control method further includes: constructing the PowerONE software architecture of the VCU, the BMS, and the MCU to integrate the VCU, the BMS, and the MCU into the same software architecture. It can be understood that the PowerONE software architecture of the VCU, the BMS, and the MCU is constructed to integrate the VCU, the BMS, and the MCU into the same software architecture.

Step S20: determining the vehicle interface configuration of the vehicle control layer based on the vehicle sub-task set, determining the battery management interface configuration of the battery management layer based on the battery sub-task set, and determining the motor control interface configuration of the motor control layer based on the motor sub-task set.

In this embodiment, the vehicle interface configuration is configured to describe the interface information of the vehicle control layer, the battery management interface configuration is configured to describe the interface information of the battery management layer, and the motor control interface configuration is configured to describe the interface information of the motor control layer. In an embodiment, the vehicle interface configuration may be an .arxml file of the vehicle control layer, the battery management interface configuration may be an .arxml file of the battery management layer, and the motor control interface configuration may be an .arxml file of the motor control layer. The vehicle interface configuration is generated based on the content of the vehicle sub-task set, the battery management interface configuration is generated based on the content of the battery sub-task set, and the motor control interface configuration is generated based on the content of the motor sub-task set.

In this embodiment, based on the vehicle sub-task set, the battery sub-task set, and the motor sub-task set, the vehicle interface configuration of the vehicle control layer, the battery management interface configuration of the battery management layer, and the motor control interface configuration of the motor control layer are determined. Since the vehicle control layer, the battery management layer, and the motor control layer can respectively determine the vehicle interface configuration, the battery management interface configuration, and the motor control interface configuration, the vehicle control layer, the battery management layer, and the motor control layer will not affect each other during operation, that is, necessary boundary isolation is set for the vehicle control layer, the battery management layer, and the motor control layer, avoiding the functions of the vehicle control layer, the battery management layer, and the motor control layer being mixed together, thereby preventing mutual involvement and influence.

Step S30: integrating the vehicle control layer, the battery management layer, and the motor control layer into the powertrain domain control system of the powertrain domain control unit of the automobile based on the vehicle interface configuration, the battery management interface configuration, and the motor control interface configuration.

In this embodiment, the powertrain domain control unit of the vehicle is an integrated control unit. The powertrain domain control unit integrates the control unit hardware of the vehicle control layer, the battery management layer, and the motor control layer. In this embodiment of the present application, the functions of the BMS and the MCU can be implemented without the control unit hardware of the battery management layer and the motor control layer, which reduces the cost of the control unit hardware and further reduces the development cost.

In this embodiment, the vehicle control layer, the battery management layer, and the motor control layer are integrated into the powertrain domain control unit of the automobile based on the vehicle interface configuration, the battery management interface configuration, and the motor control interface configuration, that is, the vehicle control layer, the battery management layer, and the motor control layer are integrated into the same powertrain domain control unit. This avoids the situation where the vehicle cannot operate when any control unit fails when the vehicle control layer, battery management layer, and motor control layer are controlled by different control units. When the vehicle control layer, the battery management layer, and the motor control layer are integrated into the powertrain domain control unit of the automobile, the vehicle control layer, the battery management layer, and the motor control layer can perform signal interaction in the powertrain domain control unit. Since the tasks in the vehicle control layer, the battery management layer, and the motor control layer are divided into independent sub-tasks with boundary isolation between them, the dependencies among the vehicle control layer, the battery management layer, and the motor control layer are reduced. Therefore, the failure of one task will not affect the execution of other tasks. Thus, the technical problem that the vehicle cannot operate due to the failure of any one of the vehicle control layer, the battery management layer, and the motor control layer is solved, that is, the technical problem that the vehicle cannot operate due to the failure of any one of the application layer software of the VCU, the BMS, and the MCU is solved.

In an embodiment, the present application integrates the vehicle control layer, the battery management layer, and the motor control layer into the same powertrain domain control unit, so that the software development cycles of the vehicle control layer, the battery management layer, and the motor control layer are consistent. Furthermore, when verifying the vehicle control layer, the battery management layer, and the motor control layer during the development process, there is no need to wait for each other until mutual verification can be performed due to different development cycles. In the present application, there is no need to wait for each other during development, so the software development efficiency can be improved, and it can be ensured that the vehicle control layer, the battery management layer, and the motor control layer operate in the same life-cycle, which is more convenient for vehicle maintenance. In addition, the present application can reduce the cost of two control unit hardwares, that is, there is no need to separately perform the design verification plan (DVP) verification on the control unit hardwares of the BMS and the MCU, thereby saving development costs, verification costs, and labor costs.

In an embodiment, Step S10 includes:
Step S11: extracting the component tasks for functional safety from the vehicle control layer, the battery management layer, and the motor control layer respectively based on the preset safety task list, so as to obtain the vehicle safety task of the vehicle control layer, the battery safety task of the battery management layer, and the motor safety task of the motor control layer.

In this embodiment, the preset safety task list includes the component tasks for functional safety in the vehicle control layer, the battery management layer, and the motor control layer. In an embodiment, based on the preset safety task list, the SWC tasks for functional safety in the vehicle control layer are divided to obtain the vehicle safety task of the vehicle control layer. The vehicle safety task includes the SWC tasks for functional safety in the vehicle control layer. The SWC tasks for functional safety in the battery management layer are divided to obtain the battery safety task of the battery management layer. The battery safety task is the SWC task for functional safety. The SWC tasks for functional safety in the motor control layer are separately divided to obtain the SWC tasks for functional safety in the motor safety task of the motor control layer. In an embodiment of the present application, by extracting the component tasks for functional safety from the vehicle control layer, the battery management layer, and the motor control layer based on the preset safety task list, the component tasks for functional safety are prevented from being mixed with other component tasks.

Step S12: dividing the remaining component tasks in the vehicle control layer, the battery management layer, and the motor control layer respectively based on the preset task cycle, so as to obtain the vehicle cycle sub-task set of the vehicle control layer, the battery cycle sub-task set of the battery management layer, and the motor cycle sub-task set of the motor control layer.

In this embodiment, the preset task cycle is the task cycle of the SWC tasks for dividing the SWC tasks. The vehicle cycle sub-task set includes each vehicle cycle sub-task divided based on the preset task cycle. The vehicle cycle sub-tasks are the SWC tasks of the VCU. The battery cycle sub-task set includes each battery cycle sub-task divided based on the preset task cycle. The battery cycle sub-tasks include the SWC tasks of the BMS. The motor cycle sub-task set includes each motor cycle sub-task divided based on the preset task cycle. The motor cycle sub-tasks include the SWC tasks of the MCU. The remaining component tasks are the remaining component tasks after dividing the component tasks for functional safety.

In an embodiment, the preset task cycle includes a first task cycle, a second task cycle, and a third task cycle. The first task cycle may be 10ms, the second task cycle may be 50ms, and the third task cycle may be 100ms. According to the preset task cycle, the remaining component tasks in the vehicle control layer are classified based on the first task cycle, the second task cycle, and the third task cycle to obtain the vehicle cycle sub-tasks of the first task cycle, the vehicle cycle sub-tasks of the second task cycle, and the vehicle cycle sub-tasks of the third task cycle in the vehicle control layer. The vehicle cycle sub-tasks of the first task cycle, the vehicle cycle sub-tasks of the second task cycle, and the vehicle cycle sub-tasks of the third task cycle in the vehicle control layer are configured as the vehicle cycle sub-task set. The remaining component tasks in the motor control layer are classified based on the first task cycle, the second task cycle, and the third task cycle to obtain the motor cycle sub-tasks of the first task cycle, the motor cycle sub-tasks of the second task cycle, and the motor cycle sub-tasks of the third cycle in the motor control layer. The motor cycle sub-tasks of the first task cycle, the motor cycle sub-tasks of the second task cycle, and the motor cycle sub-tasks of the third cycle in the battery management layer are configured as the motor cycle sub-task set. The remaining component tasks in the battery management layer are classified based on the first task cycle, the second task cycle, and the third task cycle to obtain the battery cycle sub-tasks of the first task cycle, the battery cycle sub-tasks of the second task cycle, and the battery cycle sub-tasks of the third cycle in the battery management layer. The battery cycle sub-tasks of the first task cycle, the battery cycle sub-tasks of the second task cycle, and the battery cycle sub-tasks of the third cycle in the battery management layer are configured as the battery cycle sub-task set.

Step S13: using the vehicle cycle sub-task set and the vehicle safety task together as the vehicle sub-task set of the vehicle control layer, using the battery cycle sub-task set and the battery safety task together as the battery sub-task set of the battery management layer, and using the motor cycle sub-task set and the motor safety task together as the motor sub-task set of the motor control layer.

In this embodiment, through the preset safety task list, the component tasks for functional safety in the vehicle control layer, the battery management layer, and the motor control layer are respectively separated, so that the component tasks for functional safety are separated. Based on the preset task cycle, the remaining component tasks in the vehicle control layer, the battery management layer, and the motor control layer are respectively divided into the first task cycle, the second task cycle, and the third task cycle, so that the component tasks with different task cycles in the vehicle control layer, the battery management layer, and the motor control layer are classified and separated, and the component tasks do not affect each other. It can be understood that when any component task fails, all component tasks will not stop executing, and the failed component task can be located to determine the cause of the failure. Thus, when the vehicle fails, the efficiency of determining the cause of the failure is improved, and the situation where the vehicle cannot operate when any component task fails is avoided.

Based on the above first embodiment, a second embodiment of the powertrain domain integrated control method is provided. After Step S10: dividing the component tasks of the vehicle control layer, the battery management layer, and the motor control layer of the automobile respectively, so as to obtain the vehicle sub-task set of the vehicle control layer, the battery sub-task set of the battery management layer, and the motor sub-task set of the motor control layer, the method further includes:
Step A10: performing reliability verification on the vehicle control layer, the battery management layer, and the motor control layer respectively until the reliability verification of the vehicle control layer, the battery management layer, and the motor control layer is successful.

In this embodiment, before integrating the vehicle control layer, the battery management layer, and the motor control layer into one powertrain domain control unit, reliability verification shall be performed on the vehicle control layer, the battery management layer, and the motor control layer respectively. The reliability verification is configured to verify whether the functions of the vehicle control layer, the battery management layer, and the motor control layer can operate normally. The reliability verification includes the model-in-loop (MIL) verification and the hardware-in-loop (HIL) verification. After the reliability verification of the vehicle control layer, the battery management layer, and the motor control layer is successful, Step S30 is executed. If the reliability verification of any one of the vehicle control layer, the battery management layer, and the motor control layer fails, the verification is repeated until the reliability verification is successful. In an embodiment, the reliability verification can be repeated by adding verification cases.

In an embodiment, Step A10, performing reliability verification on the vehicle control layer, the battery management layer, and the motor control layer respectively includes:
Step A11: performing the MIL verification on the vehicle control layer, and performing the HIL verification on the vehicle control layer based on the powertrain domain control unit after the MIL verification of the vehicle control layer is successful.

Step A12: performing the MIL verification on the battery management layer and the motor control layer respectively, and performing the HIL verification on the battery management layer and the motor control layer respectively after the MIL verification of the battery management layer and the motor control layer is successful.

In this embodiment, the reliability verification includes the MIL verification and the HIL verification. The HIL verification can be simulated HIL verification or real HIL verification. The simulated HIL verification can be rapid prototype control unit verification, and the real HIL verification is based on the real control unit hardware. The simulated HIL verification is based on the simulated control unit hardware. The powertrain domain control unit can be obtained by improving the control unit hardware of the VCU. Therefore, when performing hardware verification on the VCU, the real HIL verification can be directly performed through the control unit hardware of the VCU without performing simulated hardware verification, which improves the accuracy of the hardware verification.

In an embodiment, the MIL verification is performed on the vehicle control layer. After the MIL verification is successful, the HIL verification is performed on the vehicle control layer based on the powertrain domain control unit. The MIL verification is performed on the battery management layer and the motor control layer respectively. After the MIL verification of the battery management layer and the motor control layer is successful, the HIL verification is performed on the battery management layer and the motor control layer. Specifically, the MIL verification and the HIL verification can be performed on the software model of the application layer of the vehicle control layer, and the MIL verification and the HIL verification can be performed on the software model of the application layers of the battery management layer and the motor control layer respectively. The software model of the application layer of the vehicle control layer can be considered as the software model of the application layer of the vehicle control layer constructed in the PowerONE architecture. The software model of the application layer includes the component tasks of the vehicle control layer, which can be considered to include the vehicle sub-task set. The software model of the application layer of the battery management layer can be considered as the software model of the application layer of the battery management layer constructed in the PowerONE architecture. The software model of the application layer includes the component tasks of the battery management layer, which can be considered to include the battery sub-task set. The software model of the application layer of the motor control layer can be considered as the software model of the application layer of the motor control layer constructed in the PowerONE architecture. The software model of the application layer includes the component tasks of the motor control layer, which can be considered to include the motor sub-task set.

In this embodiment, by performing the MIL verification and the HIL verification on the vehicle control layer, the battery management layer, and the motor control layer, it is ensured that the vehicle control layer, the battery management layer, and the motor control layer can operate normally. It can be understood that integrating the vehicle control layer, the battery management layer, and the motor control layer that have undergone the MIL verification and the HIL verification ensures that the respective functions of the vehicle control layer, the battery management layer, and the motor control layer can be normally executed when they are integrated into the same powertrain domain control unit.

In another embodiment, Step A12 includes:
Step A121: determining whether the battery management layer has the control unit hardware of the battery management layer.

Step A122: in response to that the battery management layer does not have the control unit hardware of the battery management layer, determining to perform simulated HIL verification on the battery management layer.

Step A123: in response to that the battery management layer has the control unit hardware of the battery management layer, determining to perform real HIL verification based on the control unit of the battery management layer.

Step A124: determining whether the motor control layer has the control unit hardware of the motor control layer.

Step A125: in response to that the motor control layer does not have the control unit hardware of the motor control layer, determining to perform simulated HIL verification on the battery management layer.

Step A126: in response to that the motor control layer has the control unit hardware of the motor control layer, determining to perform real HIL verification based on the control unit of the motor control layer.

In this embodiment, there are two implementation modes for performing the HIL verification on the battery management layer and the motor control layer. When the battery management layer or the motor control layer has hardware support, the real hardware verification can be performed. When the battery management layer or the motor control layer does not have hardware support, the simulated hardware verification can be performed. The hardware support refers to the control unit hardware of the motor control layer or the control unit hardware of the battery management layer.

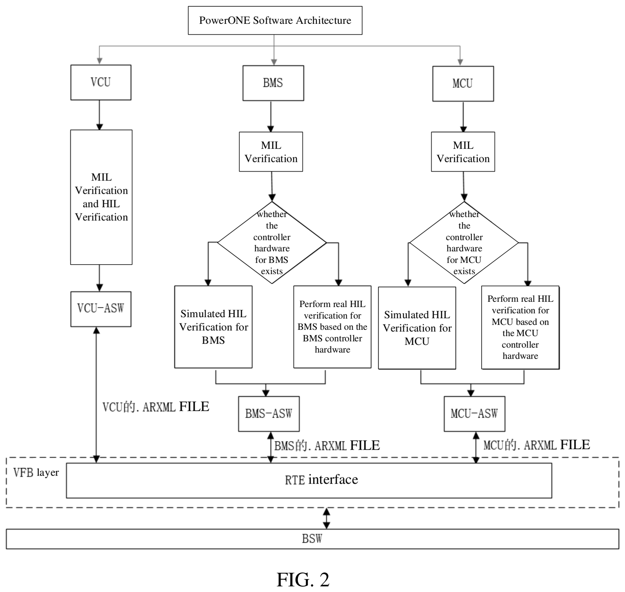

In an embodiment, with reference to FIG. 2, FIG. 2 is a schematic flowchart of verification and integration in the powertrain domain integrated control method of the present application. The software architecture of the VCU, the BMS, and the MCU is constructed based on the PowerONE, and the MIL verification and the HIL verification are performed on the software models of the VCU, the BMS, and the MCU respectively. In the present application, when performing the HIL verification on the VCU, real HIL verification can be performed based on the powertrain domain control unit. In response to that the control unit hardware of the battery management layer (BMS) exists, real HIL verification is performed on the battery management layer based on the control unit hardware of the battery management layer. In response to that the control unit hardware of the motor control layer (MCU) exists, real HIL verification is performed on the motor control layer based on the control unit hardware of the motor control layer. Thus, the accuracy of HIL verification can be improved. In another embodiment, in response to that the control unit hardware of the battery management layer does not exist, simulated HIL verification is performed on the battery management layer. In response to that the control unit hardware of the motor control layer does not exist, simulated HIL verification is performed on the motor control layer. It can be understood that the present application can also perform hardware verification on the battery management layer and the motor control layer when there is no control unit hardware of the battery management layer and no control unit hardware of the motor control layer, thereby reducing the verification cost and ensuring the reliability of the battery management layer and the motor control layer. After the reliability verification of the software models of the VCU, the BMS, and the MCU is completed, the .ARXML file (descriptive file of the interaction interface) of the VCU, the .ARXML file of the BMS, and the .ARXML file of the MCU are generated respectively. Then, based on the .ARXML files of the VCU, the BMS, and the MCU and the real-time engagement (RTE) interface of the virtual function bus (VFB) layer, communication is performed with the BSW of the powertrain domain control system, thereby realizing signal interaction among the VCU, the BMS, and the MCU in the powertrain domain control system. The VFB is a collection of all communication mechanisms provided by AUTOSAR.

Based on the above embodiment, a third embodiment of the powertrain domain integrated control method is provided. Step 30 includes:
Step B10: controlling the vehicle control layer to perform RTE communication with the basic environment of the powertrain domain control unit based on the vehicle interface configuration, so as to integrate the vehicle control layer into the basic environment of the powertrain domain control unit.

Step B20: controlling the battery management layer to perform RTE communication with the basic environment of the powertrain domain control unit based on the battery management interface configuration, so as to integrate the battery management layer into the basic environment of the powertrain domain control unit.

Step B30: controlling the motor control layer to perform RTE communication with the basic environment of the powertrain domain control unit based on the motor control interface configuration, so as to integrate the motor control layer into the basic environment of the powertrain domain control unit.

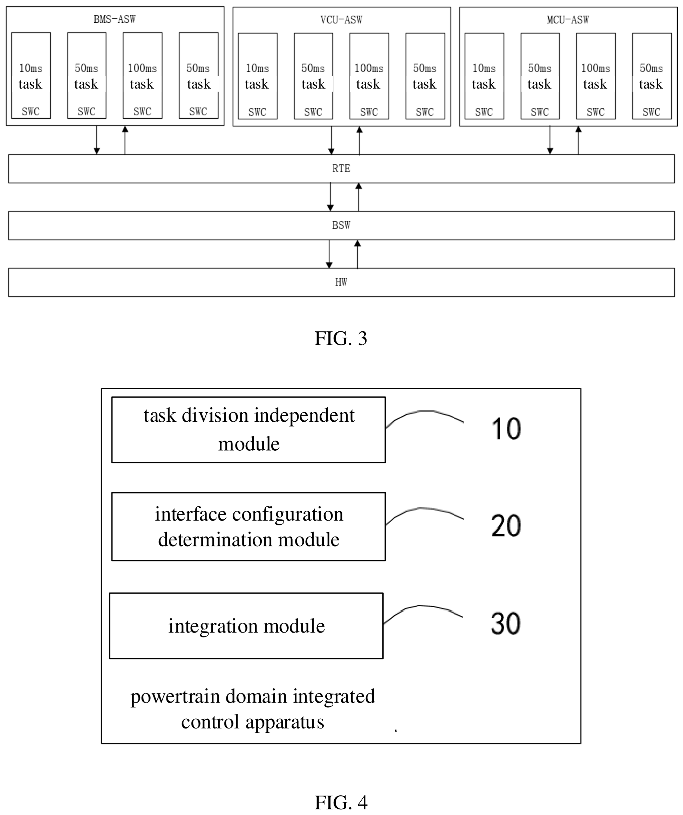

In this embodiment, there is a communication layer between the vehicle control layer and the basic environment of the powertrain domain control unit. The communication layer may be the VFB, which is a collection of all communication mechanisms provided by AUTOSAR. In this embodiment, the VFB layer includes the RTE interface. The RTE interface is the implementation of the interface of the VFB of the AUTOSAR, which provides basic services for communication among application software components. The RTE communication is performed between the vehicle control layer and the basic environment of the powertrain domain control unit, the RTE communication is performed between the battery management layer and the basic environment of the powertrain domain control unit, and the RTE communication is performed between the motor control layer and the basic environment of the powertrain domain control unit. Thus, the vehicle control layer, the battery management layer, and the motor control layer are integrated into the basic environment of the powertrain domain control system of the powertrain domain control unit, and signal interaction among the vehicle control layer, the battery management layer, and the motor control layer can be realized through the RTE communication without communication through the controller area network (CAN). Therefore, the wiring harness cost can be saved, and the electromagnetic compatibility (EMC) and signal frame loss will not occur, which improves the software development efficiency and development quality. With reference to FIG. 3, FIG. 3 is a schematic diagram of a software architecture of a powertrain domain control system in the powertrain domain integrated control method of the present application. The BMS-ASW is the software model of the application layer of the BMS, the VCU-ASW is the software model of the application layer of the VCU, and the MCU-ASW is the software model of the application layer of the MCU. The component tasks (SWC) of the BSW in the BMS-ASW are divided into 10ms SWC tasks, 50ms SWC tasks, 100ms SWC tasks, and SWC tasks for functional safety. The component tasks (SWC) of the VCU in the VCU-ASW are divided into 10ms SWC tasks, 50ms SWC tasks, 100ms SWC tasks, and SWC tasks for functional safety. The component tasks (SWC) of the MCU in the MCU-ASW are divided into 10ms SWC tasks, 50ms SWC tasks, 100ms SWC tasks, and SWC tasks for functional safety. The signal interaction can be performed among the BMS-ASW (Application Software), the MCU-ASW, and the VCU-ASW through the RTE. The BMS-ASW, the MCU-ASW, and the VCU-ASW are integrated into the BSW of the basic environment of the powertrain domain integrated system through the RTE. The BSW of the basic environment of the powertrain domain integrated system is connected to the hardware (HW) through the control unit hard wire or the CAN wire, thereby realizing signal interaction among the BMS-ASW, the MCU-ASW, and the VCU-ASW with the outside through the control unit hard wire or the CAN wire.

In an embodiment, after Step S30, the powertrain domain integrated control method further includes:
Step C10: performing communication verification between the vehicle control layer and the battery management layer.

Step C20: performing communication verification between the vehicle control layer and the motor control layer.

Step C30: performing communication verification between the battery management layer and the motor control layer.

In this embodiment, it should be noted that after integrating the vehicle control layer, the battery management layer, and the motor control layer into the basic environment of the powertrain domain control unit, communication verification shall also be performed among each pair of the vehicle control layer, the battery management layer, and the motor control layer to ensure that signal interaction can be performed among the vehicle control layer, the battery management layer, and the motor control layer.

In an embodiment, the vehicle control layer can be controlled to send a first communication verification instruction to the battery management layer and the motor control layer, the battery management layer can be controlled to send a second communication verification instruction to the vehicle control layer, and the motor control layer can be controlled to send a third communication verification instruction to the vehicle control layer. If the battery management layer receives the first communication verification instruction from the vehicle control layer and the vehicle control layer receives the second communication verification instruction, it is determined that normal communication can be performed between the vehicle control layer and the battery management layer. If the motor control layer receives the first communication verification instruction and the vehicle control layer receives the third communication verification instruction, it is determined that normal communication can be performed between the vehicle control layer and the battery management layer. The battery management layer can be controlled to send a second communication verification instruction to the motor control layer, and the motor control layer can be controlled to send a third communication verification instruction. If the motor control layer receives the second communication verification instruction from the battery management layer and the battery management layer receives the second communication verification instruction, it is determined that normal communication can be performed between the motor control layer and the battery management layer. The first communication verification instruction, the second communication verification instruction, and the third communication verification instruction are configured for communication verification to ensure that normal signal interaction can be performed among each pair of the vehicle control layer, the battery management layer, and the motor control layer, thereby ensuring the reliability of the powertrain domain control system.

With reference to FIG. 4, the embodiment of the present application further provides a powertrain domain integrated control apparatus. The powertrain domain integrated control apparatus includes:
a task division independent module 10, configured to respectively divide the component tasks of the vehicle control layer, the battery management layer, and the motor control layer of the automobile to obtain the vehicle sub-task set of the vehicle control layer, the battery sub-task set of the battery management layer, and the motor sub-task set of the motor control layer;
an interface configuration determination module 20, configured to determine the vehicle interface configuration of the vehicle control layer based on the vehicle sub-task set, determine the battery management interface configuration of the battery management layer based on the battery sub-task set, and determine the motor control interface configuration of the motor control layer based on the motor sub-task set; and
an integration module 30, configured to integrate the vehicle control layer, the battery management layer, and the motor control layer into the powertrain domain control system of the powertrain domain control unit of the automobile based on the vehicle interface configuration, the battery management interface configuration, and the motor control interface configuration.

The task division independent module 10 is further configured to:
extract the component tasks for functional safety from the vehicle control layer, the battery management layer, and the motor control layer respectively based on a preset safety task list to obtain the vehicle safety task of the vehicle control layer, the battery safety task of the battery management layer, and the motor safety task of the motor control layer;
divide the remaining component tasks in the vehicle control layer, the battery management layer, and the motor control layer respectively based on a preset task cycle to obtain the vehicle cycle sub-task set of the vehicle control layer, the battery cycle sub-task set of the battery management layer, and the motor cycle sub-task set of the motor control layer;
use the vehicle cycle sub-task set and the vehicle safety task together as the vehicle sub-task set of the vehicle control layer, use the battery cycle sub-task set and the battery safety task together as the battery sub-task set of the battery management layer, and use the motor cycle sub-task set and the motor safety task together as the motor sub-task set of the motor control layer.

The task division independent module 10 is further configured to:
perform reliability verification on the vehicle control layer, the battery management layer, and the motor control layer respectively until the reliability verification of the vehicle control layer, the battery management layer, and the motor control layer is successful.

The task division independent module 10 is further configured to:
perform MIL verification on the vehicle control layer, and perform HIL verification on the vehicle control layer based on the powertrain domain control unit after the MIL verification of the vehicle control layer is successful;
perform MIL verification on the battery management layer and the motor control layer respectively, and perform HIL verification on the battery management layer and the motor control layer respectively after the MIL verification of the battery management layer and the motor control layer is successful.

The task division independent module 10 is further configured to:
determine whether the battery management layer has the control unit hardware of the battery management layer;
in response to that the battery management layer does not have the control unit hardware of the battery management layer, determine to perform simulated HIL verification on the battery management layer;
in response to that the battery management layer has the control unit hardware of the battery management layer, determine to perform real HIL verification based on the control unit of the battery management layer;
determine whether the motor control layer has the control unit hardware of the motor control layer;
in response to that the motor control layer does not have the control unit hardware of the motor control layer, determine to perform simulated HIL verification on the battery management layer;
in response to that the motor control layer has the control unit hardware of the motor control layer, determine to perform real HIL verification based on the control unit of the motor control layer.

The integration module 30 is configured to:
control the vehicle control layer to perform RTE communication with the basic environment of the powertrain domain control unit based on the vehicle interface configuration, so as to integrate the vehicle control layer into the basic environment of the powertrain domain control unit;
control the battery management layer to perform RTE communication with the basic environment of the powertrain domain control unit based on the battery management interface configuration, so as to integrate the battery management layer into the basic environment of the powertrain domain control unit; and
control the motor control layer to perform RTE communication with the basic environment of the powertrain domain control unit based on the motor control interface configuration, so as to integrate the motor control layer into the basic environment of the powertrain domain control unit.

The integration module 30 is further configured to:
perform communication verification between the vehicle control layer and the battery management layer;
perform communication verification between the vehicle control layer and the motor control layer; and
perform communication verification between the battery management layer and the motor control layer.

The powertrain domain integrated control apparatus provided in the embodiment of the present application adopts the powertrain domain integrated control method in the above embodiment, aiming to solve the technical problem that the vehicle fails to operate due to the failure of any one of the application layer software of the VCU, the BMS, and the MCU. Compared with the prior art, the beneficial effects of the powertrain domain integrated control method provided in the embodiment of the present application are the same as those of the powertrain domain integrated control method provided in the above embodiment, and other technical features in the powertrain domain integrated control apparatus are the same as those disclosed in the method of the above embodiment, which will not be repeated here.

The embodiment of the present application provides an electronic device. The electronic device may be a playback device. The electronic device includes: at least one processor and a memory communicatively connected to the at least one processor. The memory stores instructions executable by the at least one processor, and the instructions are executed by the at least one processor, so that the at least one processor can execute the powertrain domain integrated control method in the above embodiment.

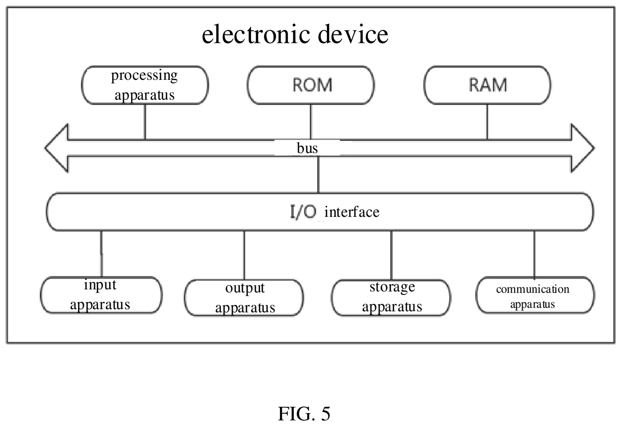

With reference to FIG. 5, which shows a schematic structural diagram of an electronic device suitable for implementing the embodiments of the present application. The electronic device in the embodiments of the present application may include, but is not limited to, mobile terminals such as mobile phones, notebook computers, digital broadcast receivers, personal digital assistant (PDA), portable android device (PAD), portable media player (PMP), in-vehicle terminals (such as in-vehicle navigation terminals), and fixed terminals such as digital TVs and desktop computers. The electronic device shown in FIG. 5 is only an example and should not bring any limitation on the functions and scope of the embodiments of the present application.

As shown in FIG. 5, the electronic device may include a processing apparatus 1001 (such as a central processing unit, a graphics processing unit, etc.), which may execute various appropriate actions and processes according to a program stored in a read-only memory (ROM) 1002 or a program loaded into a random access memory (RAM) 1004 from a storage apparatus 1003. In the RAM 1004, various programs and data required for the operation of the electronic device are also stored. The processing apparatus 1001, the ROM 1002, and the RAM 1004 are connected to each other through a bus 1005. An input/output (I/O) interface 1006 is also connected to the bus 1005.

Generally, the following systems may be connected to the I/O interface 1006: an input apparatus 1007 including, for example, a touch screen, a touch pad, a keyboard, a mouse, an image sensor, a microphone, an accelerometer, a gyroscope, etc.; an output apparatus 1008 including, for example, a liquid crystal display (LCD), a speaker, a vibrator, etc.; a storage apparatus 1003 including, for example, a magnetic tape, a hard disk, etc.; and a communication apparatus 1009. The communication apparatus 1009 may allow the electronic device to perform wireless or wired communication with other devices to exchange data. Although FIG. 5 shows an electronic device with various systems, it should be understood that it is not required to implement or have all the shown systems. Alternatively, more or fewer systems may be implemented or provided.

According to the embodiments of the present application, the processes described above with reference to the flowcharts may be implemented as computer software programs. For example, the embodiments of the present application include a computer program product, which includes a computer program carried on a computer-readable medium, and the computer program includes program code for executing the methods shown in the flowcharts. In such an embodiment, the computer program may be downloaded and installed from a network through the communication apparatus 1009, or installed from the storage apparatus 1003, or installed from the ROM 1002. When the computer program is executed by the processing apparatus 1001, the above functions defined in the methods of the embodiments of the present application are executed.

The electronic device provided in the embodiment of the present application adopts the powertrain domain integrated control method in the first embodiment, aiming to solve the technical problem that the vehicle fails to operate due to the failure of any one of the application layer software of the VCU, the BMS, and the MCU. Compared with the prior art, the beneficial effects of the product traffic data allocation provided in the embodiment of the present application are the same as those of the powertrain domain integrated control method provided in the above embodiment, and other technical features in the powertrain domain integrated control apparatus are the same as those disclosed in the method of the above embodiment, which will not be repeated here.

The present application may be implemented in hardware, software, firmware, or a combination thereof. In the description of the above embodiments, specific features, structures, materials, or characteristics may be combined in any appropriate manner in any one or more embodiments or examples.

The above descriptions are only specific implementations of the present application, but the scope of the present application is not limited thereto. Those skilled in the art can easily think of changes or substitutions within the technical scope disclosed in the present application, which should be covered within the scope of the present application. Therefore, the scope of the present application should be subject to the scope of the claims.

This embodiment provides a readable storage medium, on which computer-readable program instructions are stored, and the computer-readable program instructions are configured to execute the powertrain domain integrated control method in the first embodiment.

The readable storage medium provided in the embodiment of the present application may be a USB flash drive, but is not limited to an electrical, magnetic, optical, electromagnetic, infrared, or semiconductor device, apparatus, or device, or any combination of the above. More specific examples of the readable storage medium may include, but are not limited to: an electrical connection with one or more wires, a portable computer disk, a hard disk, a random access memory (RAM), a read-only memory (ROM), an erasable programmable electrical programmable read only memory (EPROM), a flash memory, an optical fiber, a portable compact disc compact disc read-only memory (CD-ROM), an optical storage device, a magnetic storage device, or any appropriate combination of the above. In this embodiment, the readable storage medium may be any tangible medium that contains or stores a program, and the program may be used by or in combination with an instruction execution device, apparatus, or device. The program code contained on the readable storage medium may be transmitted through any appropriate medium, including but not limited to: wires, optical cables, radio frequency (RF), etc., or any appropriate combination of the above.

The above readable storage medium may be included in the electronic device; or it may exist independently without being assembled into the electronic device.

The above readable storage medium carries one or more programs. When the above one or more programs are executed by the electronic device, the electronic device is caused to: divide the component tasks of the vehicle control layer, battery management layer, and motor control layer of an automobile respectively to obtain the vehicle sub-task set of the vehicle control layer, the battery sub-task set of the battery management layer, and the motor sub-task set of the motor control layer; determine the vehicle interface configuration of the vehicle control layer based on the vehicle sub-task set, determine the battery management interface configuration of the battery management layer based on the battery sub-task set, and determine the motor control interface configuration of the motor control layer based on the motor sub-task set; integrate the vehicle control layer, the battery management layer, and the motor control layer into the powertrain domain control system of the powertrain domain control unit of the vehicle based on the vehicle interface configuration, the battery management interface configuration, and the motor control interface configuration.

Computer program code for executing the operations of the present application may be written in one or more programming languages or a combination thereof. The above programming languages include object-oriented programming languages such as Java, Smalltalk, and C++, and also include conventional procedural programming languages such as the "C" language or similar programming languages. The program code may be executed entirely on the user's computer, partially on the user's computer, executed as an independent software package, partially on the user's computer and partially on a remote computer, or entirely on the remote computer or server. In the case of a remote computer, the remote computer may be connected to the user's computer through any type of network, including a local area network (LAN) or a wide area network (WAN), or may be connected to an external computer (for example, through the Internet using an Internet service provider).

The flowcharts and block diagrams in the accompanying drawings illustrate the possible implementation architectures, functions, and operations of the devices, methods, and computer program products according to various embodiments of the present application. In this regard, each block in the flowcharts or block diagrams may represent a module, program segment, or part of code, and the module, program segment, or part of code includes one or more executable instructions for implementing the specified logical functions. It should also be noted that in some alternative implementations, the functions marked in the blocks may occur in a different order from that marked in the accompanying drawings. For example, two consecutively marked blocks may actually be executed substantially in parallel, or they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based device that performs the specified functions or operations, or by a combination of dedicated hardware and computer instructions.

The modules involved in the embodiments described in the present application may be implemented in software or hardware. The name of the module does not constitute a limitation on the module itself in some cases.

The readable storage medium provided in the present application stores computer-readable program instructions for executing the above powertrain domain integrated control method, aiming to solve the technical problem that the vehicle fails to operate due to the failure of any one of the application layer software of the VCU, the BMS, and the MCU. Compared with the prior art, the beneficial effects of the readable storage medium provided in the embodiment of the present application are the same as those of the powertrain domain integrated control method provided in the above embodiment, which will not be repeated here.

The present application further provides a computer program product, including a computer program. When the computer program is executed by a processor, the steps of the above powertrain domain integrated control method are implemented.

The computer program product provided in the present application aims to solve the technical problem that the vehicle fails to operate due to the failure of any one of the application layer software of the VCU, the BMS, and the MCU. Compared with the prior art, the beneficial effects of the computer program product provided in the embodiment of the present application are the same as those of the powertrain domain integrated control method provided in the above embodiment, which will not be repeated here.

The above are only the embodiments of the present application, and are not intended to limit the scope of the present application. Any equivalent structure or equivalent process transformation made by using the content of the specification and drawings of the present application, or directly or indirectly applied in other related technical fields, is similarly included in the scope of the present application.

## Claims

1. A powertrain domain integrated control method, **characterized by** comprising:
dividing component tasks of a vehicle control layer, a battery management layer, and a motor control layer of an automobile respectively to obtain a vehicle sub-task set of the vehicle control layer, a battery sub-task set of the battery management layer, and a motor sub-task set of the motor control layer;
determining a vehicle interface configuration of the vehicle control layer based on the vehicle sub-task set, determining a battery management interface configuration of the battery management layer based on the battery sub-task set, and determining a motor control interface configuration of the motor control layer based on the motor sub-task set; and
integrating the vehicle control layer, the battery management layer, and the motor control layer into a powertrain domain control system of a powertrain domain control unit of the automobile based on the vehicle interface configuration, the battery management interface configuration, and the motor control interface configuration.

2. The powertrain domain integrated control method according to claim 1, wherein the step of dividing component tasks of the vehicle control layer, the battery management layer, and the motor control layer of the automobile respectively to obtain the vehicle sub-task set of the vehicle control layer, the battery sub-task set of the battery management layer, and the motor sub-task set of the motor control layer comprises:
extracting component tasks for functional safety from the vehicle control layer, the battery management layer, and the motor control layer respectively based on a preset safety task list to obtain a vehicle safety task of the vehicle control layer, a battery safety task of the battery management layer, and a motor safety task of the motor control layer;
dividing remaining component tasks in the vehicle control layer, the battery management layer, and the motor control layer respectively based on a preset task cycle to obtain a vehicle cycle sub-task set of the vehicle control layer, a battery cycle sub-task set of the battery management layer, and a motor cycle sub-task set of the motor control layer; and
using the vehicle cycle sub-task set and the vehicle safety task together as the vehicle sub-task set of the vehicle control layer, using the battery cycle sub-task set and the battery safety task together as the battery sub-task set of the battery management layer, and using the motor cycle sub-task set and the motor safety task together as the motor sub-task set of the motor control layer.

3. The powertrain domain integrated control method according to claim 1, wherein after the step of dividing component tasks of the vehicle control layer, the battery management layer, and the motor control layer of the automobile respectively to obtain the vehicle sub-task set of the vehicle control layer, the battery sub-task set of the battery management layer, and the motor sub-task set of the motor control layer, the powertrain domain integrated control method further comprises:
performing reliability verification on the vehicle control layer, the battery management layer, and the motor control layer respectively until the reliability verification of the vehicle control layer, the battery management layer, and the motor control layer is successful.

4. The powertrain domain integrated control method according to claim 3, wherein the step of performing reliability verification on the vehicle control layer, the battery management layer, and the motor control layer respectively comprises:
performing a model-in-loop (MIL) verification on the vehicle control layer, and performing a hardware-in-loop (HIL) verification on the vehicle control layer based on the powertrain domain control unit after the MIL verification on the vehicle control layer is successful; and
performing the MIL verification on the battery management layer and the motor control layer respectively, and performing the HIL verification on the battery management layer and the motor control layer respectively after the MIL verification on the battery management layer and the motor control layer is successful.

5. The powertrain domain integrated control method according to claim 4, wherein the HIL verification comprises simulated HIL verification and real HIL verification;
the step of performing the HIL verification on the battery management layer and the motor control layer of the powertrain domain control unit respectively comprises:
determining whether control unit hardware of the battery management layer exists in the battery management layer;
in response to that the control unit hardware of the battery management layer does not exist in the battery management layer, determining to perform the simulated HIL verification on the battery management layer;
in response to that the control unit hardware of the battery management layer exists in the battery management layer, determining to perform the real HIL verification based on the control unit of the battery management layer;
determining whether control unit hardware of the motor control layer exists in the motor control layer;
in response to that the control unit hardware of the motor control layer does not exist in the motor control layer, determining to perform the simulated HIL verification on the battery management layer; and
in response to that the control unit hardware of the motor control layer exists in the motor control layer, determining to perform the real HIL verification based on the control unit of the motor control layer.

6. The powertrain domain integrated control method according to claim 1, wherein the step of integrating the vehicle control layer, the battery management layer, and the motor control layer into the powertrain domain control system of the powertrain domain control unit of the automobile based on the vehicle interface configuration, the battery management interface configuration, and the motor control interface configuration comprises:
controlling the vehicle control layer to perform a real-time engagement (RTE) communication with a basic environment of the powertrain domain control unit based on the vehicle interface configuration, so as to integrate the vehicle control layer into the basic environment of the powertrain domain control unit;
controlling the battery management layer to perform the RTE communication with the basic environment of the powertrain domain control unit based on the battery management interface configuration, so as to integrate the battery management layer into the basic environment of the powertrain domain control unit; and
controlling the motor control layer to perform the RTE communication with the basic environment of the powertrain domain control unit based on the motor control interface configuration, so as to integrate the motor control layer into the basic environment of the powertrain domain control unit.

7. The powertrain domain integrated control method according to claim 1, wherein after the step of integrating the vehicle control layer, the battery management layer, and the motor control layer into the powertrain domain control system of the powertrain domain control unit of the automobile based on the vehicle interface configuration, the battery management interface configuration, and the motor control interface configuration, the powertrain domain integrated control method further comprises:
performing communication verification between the vehicle control layer and the battery management layer;
performing communication verification between the vehicle control layer and the motor control layer; and
performing communication verification between the battery management layer and the motor control layer.

8. A powertrain domain integrated control apparatus, **characterized by** comprising:
a task division independent module, configured to respectively divide component tasks of a vehicle control layer, a battery management layer, and a motor control layer of an automobile to obtain a vehicle sub-task set of the vehicle control layer, a battery sub-task set of the battery management layer, and a motor sub-task set of the motor control layer;
an interface configuration determination module, configured to determine a vehicle interface configuration of the vehicle control layer based on the vehicle sub-task set, determine a battery management interface configuration of the battery management layer based on the battery sub-task set, and determine a motor control interface configuration of the motor control layer based on the motor sub-task set; and
an integration module, configured to integrate the vehicle control layer, the battery management layer, and the motor control layer into a powertrain domain control system of a powertrain domain control unit of the automobile based on the vehicle interface configuration, the battery management interface configuration, and the motor control interface configuration.

9. An electronic device, **characterized by** comprising:
at least one processor; and
a memory communicatively connected to the at least one processor;
wherein the memory stores instructions executable by the at least one processor, and the instructions are executed by the at least one processor, so that the at least one processor is configured to execute the steps of the powertrain domain integrated control method according to any one of claims 1 to 7.

10. A readable storage medium, **characterized in that**, a program for implementing a powertrain domain integrated control method is stored on the readable storage medium, and steps of the powertrain domain integrated control method according to any one of claims 1 to 7 are implemented when the program for implementing the powertrain domain integrated control method is executed by a processor.
